Europäisches Patentamt

European Patent Office

Office européen des brevets

(19)

(11) Veröffentlichungsnummer : **0 290 786 B1**

# (12) EUROPÄISCHE PATENTSCHRIFT

(45) Veröffentlichungstag der Patentschrift :
03.04.91 Patentblatt 91/14

(51) Int. Cl.$^5$ : **B60T 13/14**

(21) Anmeldenummer : **88105588.3**

(22) Anmeldetag : **08.04.88**

(54) Bremsventil mit Bremskraftverstärker.

(30) Priorität : 09.05.87 DE 3715568

(43) Veröffentlichungstag der Anmeldung :
17.11.88 Patentblatt 88/46

(45) Bekanntmachung des Hinweises auf die
Patenterteilung :
03.04.91 Patentblatt 91/14

(84) Benannte Vertragsstaaten :
DE FR GB SE

(56) Entgegenhaltungen :
DE-A- 2 449 612
DE-A- 3 439 271
DE-B- 1 173 709

(73) Patentinhaber : ROBERT BOSCH GMBH
Postfach 50
W-7000 Stuttgart 1 (DE)

(72) Erfinder : Schmitt, Edgar, Ing.-grad.
Am Wolfsberg 111
W-7143 Vaihingen/Enz (DE)

## Beschreibung

### Stand der Technik

Die Erfindung betrifft ein Bremsventil für Bremskraftverstärker nach dem Oberbegriff des Anspruchs 1. Ein derartiges Bremsventil ist aus der DE-A-3.439.271 bekannt. Zur Steigerung der Bremswirkung, werden bei Fahrzeugen zwischen Bremspedal und Bremssystem Bremskraftverstärker eingeschaltet, welche die Aufgabe haben, die auf das Pedal eingeleitete Kraft zu verstärken. Die bekannten Bremskraftverstärker enthalten ein Bremsventil, welches über das Bremspedal betätigt wird und dadurch ein unter Druck stehendes Medium auf einen Verstärkerkolben wirken läßt, der wiederum eine Bremskraft erzeugt. Ein bei diesen Bremsventilen verwendeter Schieber wird üblicherweise an mindestens zwei Stellen gelagert. Durch Bearbeitungstoleranzen liegt der Schieber unter Umständen nicht zentrisch zu dem als Gegenstück ausgebildeten Ventilsitz, und muß daher über eine ausreichend große Federkraft in den Ventilsitz gedrückt werden.

### Vorteile der Erfindung

Bei Verwendung einer kugelig gelagerten, schwenkbaren Hülse, in welcher der Schieber geführt ist, kann sich der Schieber im Ventilsitz selbst zentrieren, so daß ein sicheres Schließen des Ventils gewährleistet ist. Des halb kann auch die Federkraft der zum Schließen des Ventils benötigten Feder verringert werden. Dabei ist es außerdem besonders vorteilhaft, wenn die am Umfang der Hülse benötigten Dichtungen in Höhe des Drehpunktes angeordnet werden, damit ungleichmäßige Verformungen aufgrund der Schwenkbarkeit der Hülse an den Dichtungen vermieden werden.

### Zeichnung

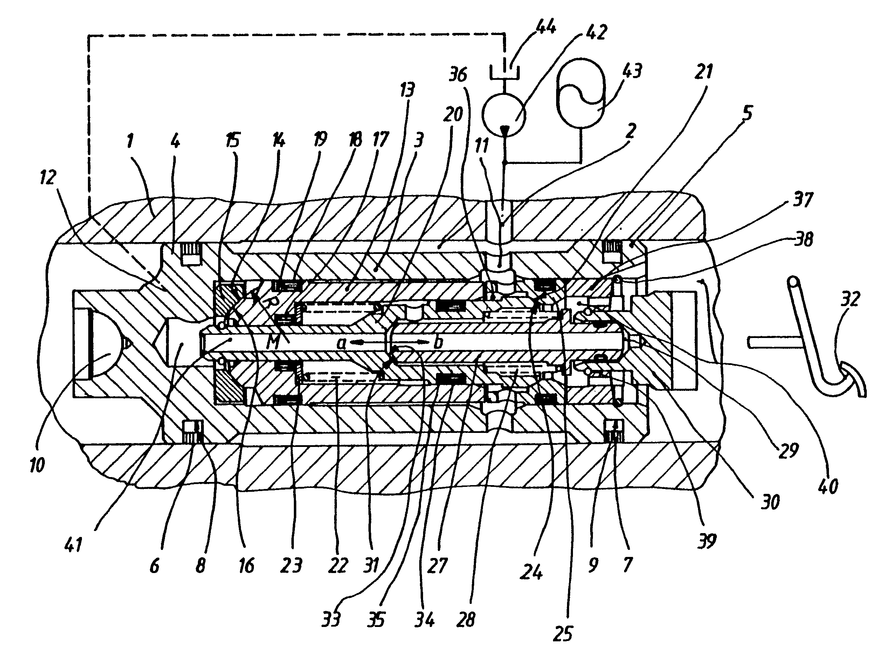

Die Erfindung wird nachfolgend anhand der Zeichnung erläutert.

In einem Gehäuse 1 mit Bohrung 2 zum Einleiten einer Hydraulikflüssigkeit ist ein Verstärkerkolben 3 verschiebbar gelagert. Der Verstärkerkolben 3 ist am Umfang mit zwei Bünden 4, 5 versehen, wobei der Bund 5 einen geringfügig größeren Außendurchmesser hat. Zur Aufnahme von Dichtungen 6, 7 dienen an den Bünden 4, 5 zwei Ringnuten 8, 9. Am stirnseitgen Ende des Verstärkerkolbens 4 ist eine halbkugelförmige Vertiefung eingeformt, die zur Aufnahme eines nicht dargestellten Bolzens dient, der mit dem Hauptbremszylinder verbunden ist. Durch eine Bohrung 11 wird Hydraulikflüssigkeit zugeführt und durch eine Bohrung 12 abgeführt. Im Verstärkerkolben 3 liegt eine Hülse 13, an deren Ende eine Fase 14 mit kugeliger Fläche angeformt ist. Die Hülse 13 liegt mit der Fase 14, die den Radius R besitzt, an einer Lagerscheibe 15 an, die ebenfalls mit einer kugeligen oder kegeligen Fase 16 versehen ist. Die Hülse 13 läßt sich dadurch um einen Drehpunkt M schwenken, der den Mittelpunkt der durch die Fase 14 gebildeten kugeligen Fläche darstellt.

Es sind eine statische Dichtung 19, und zwei dynamische Dichtungen 17 und 18 vorhanden, die vorzugsweise, um deren Verformung zu vermeiden, in Höhe des Drehpunktes M angeordnet sind.

In der Hülse 13 ist ein Schieber 20 gelagert, der mit einem stirnseitigen angeformten Ventilkegel 21 durch eine Feder 22, die sich an einer Deckscheibe 23 abstützt, gegen den Ventilsitz 24 einer Ventilbuchse 25 gedrückt wird und zusammen mit dieser ein äußeres Ventil bildet. Geöffnet wird wird der Schieber 20 mit einer Druckhülse 27, die durch eine Feder 28 in einer Bohrung 29 im Pedalstößel 30 gedrückt wird. Die Druckhülse 27 ist an einem Ende mit einer Fase 31 versehen, die bei Betätigen des Bremspedals 32 an einer Fase 33 im Schieber 20 anliegt. Der Schieber 20 und die Druckhülse 27 bilden somit ein zweites Ventil, das von der Feder 28 in geöffneter Position gehalten wird. Eine statische Dichtung 34 und eine dynamische Dichtung 35 sind zur Abdichtung eines Raumes 36 vorgesehen, in dem ein Überdruck herrscht. Ein Distanzring 37 und Sprengringe, 38, 39 dienen zur Verbindung des Verstärkerkolbens 3 mit dem Pedalstößel 30.

Die Funktionsweise des erfindungsgemäßen Bremsventils für Bremskraftverstärker ist folgende :

Beim Betätigen des Bremspedals 32, schiebt der Pedalstößel 30 die Druckhülse 27 entgegen der Kraft der Feder 28 in Richtung a, bis sie mit der Fase 31 an der Fase 33 des Schiebers 20 anliegt. Beim Weiterbewegen des Bremspedals wird auch der Schieber 20 in Richtung a mitgenommen und das äußere Ventil geöffnet. Der im Raum 36 von einer Pumpe 42 mit Druckspeicher 43 erzeugte Druck wird dadurch ebenso im Raum 40 aufgebaut, wirkt auf den Verstärkerkolben 3 und bewegt ihn ebenfalls in Richtung a. Ein nicht dargestellter Bolzen, der in der halbkugelförmigen Vertiefung 10 an der Stirnseite des Verstärkerkolbens 3 gelagert ist, überträgt die erzeugte Kraft auf den Hauptbremszylinder. Die Bewegung des Verstärkerkolbens 4 dauert so lange an, bis der Ventilsitz der vom Sprengring 38 über den Distanzring 37 mitgenommenen Ventilbuchse 25 wieder am Schieber anliegt, so daß das äußere Ventil geschlossen ist. Wird das Bremspedal 32 weitergedrückt, so wiederholt sich dieser Vorgang. Beim Entlasten des Pedals bewegen sich der Pedalstößel 30 und die durch die Feder 28 in die Bohrung 29 gedrückte Druckhülse 27 in Richtung b und öffnen das innere Ventil, während das äußere Ventil geschlossen bleibt. Der im Raum 40 herrschende Druck wird durch das Öffnen des inneren Ventils zum drucklosen Raum 41 hin abgebaut, wobei die Hydraulikflüssigkeit über die Bohrung 12 in ein Reservoir 44 zurückgelangen kann. Der Überdruck im Raum 36 bewirkt, daß am geringfügig größeren Außendurchmesser des Bundes 5 eine Kraft angreift, die den gesamten Verstärkerkolben in Richtung b bewegt. Der Schieber 20 nähert sich der Druckhülse 27, bis er daran stirnseitig anliegt. Das inner Ventil ist in dieser Stellung geschlossen und der Rückfluß der Hydraulikflüssigkeit in das Reservoir 44 unterbrochen. Folglich kommt auch der Verstärkerkolben 4 zum Stillstand.

Durch die kugelige Lagerung der Hülse 13 ergibt sich für den Schieber 20, der in der Hülse 13 geführt ist, eine entsprechende geringfügige Schwenkbarkeit um den Drehpunkt M, die das Schließen des Ventilsitzes 24 am Ventilkegel 21 erleichtert. Der Ventilsitz 24 kann dadurch mit verhältnismäßig geringen Federkräften selbst bei vorhandenen Lagerungstoleranzen bzw. Ventilsitztoleranzen in den Ventilkegel 21 exakt eingeführt werden.

## Ansprüche

1. Bremsventil für Bremskraftverstärker, das in einem Verstärkerkolben angeordnet ist und einen Schieber mit einem Ventilkegel hat, der in Ruhestellung mittels Federkraft gegen den Ventilsitz des Bremsventils gepreßt ist, dadurch gekennzeichnet, daß der Schieber (20) bezüglich eines von seinem Ventilkegel (21) entfernten Drehpunktes (M) schwenkbar im Verstärkerkolben (3) gelagert ist.

2. Bremsventil nach Anspruch 1, dadurch gekennzeichnet, daß der Schieber (20) in einer Hülse (13) axial verschiebbar gelagert ist, und daß die Hülse um den Drehpunkt (M) geringfügig schwenkbar ist.

3. Bremsventil nach Anspruch 2, dadurch gekennzeichnet, daß die Hülse (13) an der dem Ventilsitz (24) des Bremsventils abgewandten Stirnseite kugelig gelagert ist.

4. Bremsventil nach Anspruch 3, dadurch gekennzeichnet, daß eine stirnseitig an der Hülse (13) ausgebildete kugelige Fase (16) in eine entsprechend kugelig oder kegelig ausgebildete Lagerscheibe (15) eingesetzt ist, die im Verstärkerkolben (3) gelagert ist.

5. Bremsventil nach einem der vorhergehenden Ansprüche, dadurch gekennzeichnet, daß am Umfang der Hülse (13) benötigte Dichtungen (18, 19) in Höhe des Drehpunktes (M) angeordnet sind.

## Claims

1. Brake valve for brake boosters, arranged in a booster piston and having a slide with a valve cone which, in the position of rest, is pressed by means of spring force against the valve seat of the brake valve, characterized in that the slide (20) is mounted in the booster piston (3) pivotably in relation to a centre of rotation (M) remote from its valve cone (21).

2. Brake valve according to Claim 1, characterized in that the slide (20) is mounted axially displaceably in a sleeve (13), and in that the sleeve is slightly pivotable about the centre of rotation (M).

3. Brake valve according to Claim 2, characterized in that the sleeve (13) is ball-mounted on the end face turned away from the valve seat (24) of the brake valve.

4. Brake valve according to Claim 3, characterized in that a spherical chamfer (16) formed on the end face of the sleeve (13) is inserted into a correspondingly spherical or conical bearing disc (15) which is mounted in the booster piston (3).

5. Brake valve according to one of the preceding Claims, characterized in that gaskets (18, 19) required on the circumference of the sleeve (13) are arranged level with the centre of rotation (M).

## Revendications

1. Soupape de frein pour amplificateur de force de freinage logée dans un piston-amplificateur et ayant un tiroir avec un cône de soupape qui est pressé en position de repos, par la force de ressort contre le siège de la soupape de frein, caractérisée en ce que le tiroir (20) est monté pivotant dans le piston-amplificateur (3) autour d'un point de rotation (M) éloigné du siège de soupape (21).

2. Soupape de frein selon la revendication 1, caractérisée en ce que le tiroir (20) est monté coulissant axialement dans une douille (13) et cette douille peut légèrement pivoter autour du point de rotation (M).

3. Soupape de frein selon la revendication 2, caractérisée en ce que la douille (13) est montée suivant une liaison à rotule sur sa face frontale opposée à celle du siège de soupape (24) de la soupape de frein.

4. Soupape de frein selon la revendication 3, caractérisée par un chanfrein (16) sphérique réalisé sur la face frontale de la douille (13) qui est logée dans une rondelle de palier (15) de forme sphérique ou conique correspondante dans le piston-amplificateur (3).

5. Soupape de frein selon l'une des revendications précédentes, caractérisée en ce que les joints nécessaires (18, 19) sont prévus à la périphérie de la douille (13) à la hauteur du point de pivotement (M).